# EUROPÄISCHE PATENTSCHRIFT

(11) **EP 1 354 966 B1**
(45) Veröffentlichungstag und Bekanntmachung des Hinweises auf die Patenterteilung: **23.02.2011**
(21) Anmeldenummer: 02450276.7
(22) Anmeldetag: 05.12.2002
(51) Int. Cl.: C14C 11/00, C14B 1/40, C09D 175/04

(54) **Vollnarbiges Walknappaleder und Verfahren zur Herstellung desselben**
Full grain drummed nappa leather and its process of preparation
Nappa pleine fleur foulonné et son procédé de préparation

(30) Priorität: 15.04.2002 AT 2382002 U
(43) Veröffentlichungstag der Anmeldung: 22.10.2003
(73) Patentinhaber: BASF SE, 67056 Ludwigshafen (DE)
(72) Erfinder: Schaefer, Philipp, 30519 Hannover (DE)

(56) Entgegenhaltungen:
- EP-A- 0 441 196
- AT-U- 4 947
- YASUDA K: "OBERFLACHENBEHANDLUNG VON LEDER" LEDER, EDUARD ROETHER VERLAG. DARMSTADT, DE, Bd. 40, Nr. 2, 1. Februar 1989 (1989-02-01), Seite 33 XP000020145 ISSN: 0024-0176

## Beschreibung

Die Erfindung betrifft ein vollnarbiges Walknappaleder, das an seiner Narbenseite mit einer Zurichtung versehen ist, die aus einer verfestigten Kunststoffdispersion besteht, wobei auf der Zurichtung gegebenenfalls eine Finish-Schicht aufgebracht ist. Ferner betrifft die Erfindung ein Verfahren zur Herstellung eines solchen Walknappaleders.

Unter dem Begriff "vollnarbiges Walknappaleder" wird ein vollnarbiges Leder verstanden, welches durch mechanische Behandlung, beispielsweise durch Walken, insbesondere durch langes Walken seine Weichheit bei gleichzeitiger Ausbildung der Walknappa-Oberflächenstruktur mit dem charakteristischen "Walkkorn" erhält. Die Ausbildung des Walkkorns kann rund oder flach, groß oder klein sein und innerhalb einer Lederhaut eines Hautzuschnittes auch unterschiedlich ausgebildet sein. In dem Bereich, wo die Lederhaut eine höhere Dichte hat und steifer ist, ist das Walkkorn nicht oder nur geringfügig ausgebildet.

Von besonderer Wichtigkeit ist bei einem Walknappaleder der Erhalt der natürlichen Oberflächenstruktur, wie beispielsweise der Haarporen, sowie der Weichheit, um den an das Leder gestellten Anforderungen, insbesondere bei dessen Verwendung für Sportschuhe, Polsterbezüge und für Innenausstattungen bei Fahrzeugen, zu entsprechen.

Es ist bereits bekannt, die Narbenseite eines vollnarbigen Leders mit einer Zurichtung zu versehen und anschließend zu walken, um das Leder für die beabsichtigte Verwendung gebrauchstüchtig zu machen, und dem Leder das Aussehen eines Walknappaleders zu verleihen. Die Narbung wird dabei vorzugsweise nicht durch Prägen der Zurichtung gebildet, sondern es ist durch die Zurichtung hindurch die natürliche Struktur der Narboberschicht, wie die Haarporen, sichtbar. Diese bekannten zugerichteten Walknappaleder erfüllen in Bezug auf Abriebfestigkeit, Kratzfestigkeit, Lichtechtheit und Farbabriebechtheit die von der Schuhindustrie und Fahrzeugindustrie gestellten Anforderungen, die erforderliche Wasserdampfdurchlässigkeit von 1,8 mg/cm²· h wird jedoch nicht oder nur sehr schwer erreicht.

Bei den bekannten Ledern besteht die Zurichtung aus mindestens zwei Schichten, nämlich aus einer sehr weichen Polymergrundschicht, die auf das vollnarbige oder geschliffene Leder vor dem Walken direkt aufgebracht wird, und aus einer harten Polymeraußenschicht, einem sogenannten Topcoat, das auf die verfestigte weiche Polymergrundschicht ebenfalls direkt aufgetragen wird. Nach der Verfestigung der harten Polymeraußenschicht wird das Leder durch Walken weich gemacht, wobei sich das Walkkorn innerhalb unterschiedlicher Zonen mehr oder weniger ausbildet.

Verursacht durch die harte Außenschicht, für welche polymere Filmbildner verwendet werden, die zu Filmen mit einer Härte von mehr als 85 Shore A führen, wird das Leder beim langen Walken, zumindest im Bauchbereich, durch Losnarbigkeit unansehnlich. Diese Bereiche betragen oft bis zum 40% der gesamten Hautfläche.

Ein weiterer Nachteil dieser Leder besteht darin, dass die von der Industrie geforderte Haftung der Zurichtung auf der Narbenseite des Leders von mindestens 3,5 N/cm², häufig auch 4,5 N/cm², bei absolut vollnarbigen Ledern nicht oder nur selten erreicht wird. Um einen Wert von 4,5 N/cm² zu erreichen, werden die Leder an ihrer Narboberfläche oft fein angeschliffen. Dies steht aber dem Wertbegriff der Vollnarbigkeit entgegen.

Ein weiterer Nachteil dieser Leder besteht darin, dass sich die harte Außenschicht der Zurichtung beim Dauerbiegeverhalten, vor allem beim Dauerbiegeverhalten in der Nässe, von der weichen Unterschicht löst, insbesondere dann, wenn die weiche Unterschicht vernetzt ist oder trennend wirkende Substanzen, wie Wachse, Öle, vor allem aber niedermolekulare Silikone enthält.

Werden Leder nach dem Zurichten lange gewalkt, um die erforderliche Weichheit zu erzielen, so weist die Zurichtung trotz der harten Außenschicht in Folge des Walkens häufig zumeist störende Oberflächenfehler auf. Außerdem verändert sich während des Walkens der Glanzgrad der Außenschicht und dadurch auch die Farbe durch Aufpolieren. Ein weiterer Nachteil besteht darin, dass sich der beim Walken zwangsläufig entstehende Staub in den Poren festsetzt, wodurch gleichfalls der Glanzgrad und die Farbe beeinflusst werden, insbesondere dann, wenn eine oberste Finish-Schicht einen weicheren und daher angenehmeren Griff vermittelt.

Die bisher bekannten Walknappaleder, welche die erwähnten Forderungen der Sportschuh- und Kraftfahrzeugindustrie erfüllen, weisen aber in der Regel nicht die erforderliche Hydrolysenbeständigkeit auf, welche, um Reklamationen zu vermeiden, von besonderer Wichtigkeit ist. Die Ursache hierfür ist meist die extrem weiche, aus einer verfestigten Kunststoffdispersion bestehende Unterschicht der Zurichtung.

Aus der AT 4967U ist ein vollnarbiges Rindnappaleder bekannt, auf dessen Narbenseite eine aus zwei Schichten bestehende Zurichtung vorgesehen ist. Hierbei wird so vorgegangen, dass zunächst auf die Narbenseite eine, Mikrohohlkugeln bildende Kompaktteilchen enthaltende, wässerige Dispersion auf der Basis von Polyurethan und/oder Polyacrylat aufgetragen und durch Wasserentzug verfestigen gelassen wird, sodass eine erste Schicht gebildet wird, dass hierauf diese verfestigte erste Schicht durch Anwendung von Druck und/oder Wärme geprägt wird, wobei sich aus den Kompaktteilchen die Mikrohohlkugeln bilden, und dass anschließend auf diese verfestigte erste Schicht eine weitere wässerige Polyurethandispersion aufgetragen wird, welche nach ihrer Verfestigung eine zweite Lackschicht bildet, worauf das Leder einer Walkbehandlung von mehreren Stunden unterzogen wird. Derartige beschichtete Walknappaleder werden in der Autoindustrie und für die Herstellung hochwertiger Polstermöbel, aber auch für Schuhobermaterial verwendet und müssen die erforderliche Geschmeidigkeit aufweisen und einen Weichheitsgrad von mindestens 4, vorzugsweise mehr als 4,5 besitzen, damit sie sich einerseits in die erforderliche Form bringen lassen können, andererseits ein angenehmes Tast- und Sitzgefühl gewährleistet ist. Der Weichheitsgrad wird mit einem Weichheitstestgerät BLC ST 300 nach IUP36 bei einem Ringdurchmesser von 25 mm gemessen.

Ferner müssen diese Leder den gestellten Anforderungen hinsichtlich Wasserdampfdurchlässigkeit, Abriebfestigkeit, Kratzfestigkeit, Dauerbiegeverhalten und Lichtechtheit entsprechen..

Die Herstellung derartiger Walknappaleder mit einer aus mehreren Schichten bestehenden Zurichtung erfordert zahlreiche Verfahrensschritte, sodass der Herstellungsprozess aufwendig und teuer ist. Nachteilig ist weiters bei dem bekannten Verfahren, dass sich beim Auftragen jeder Schicht Schmutzpartikel im nassen Beschichtungsmaterial einlagern können, die insbesondere bei Ledern mit heller Oberfläche störend wirken, sodass es hier oft zu Ausschussprodukten kommt. Dies ist auch dann der Fall, wenn auf einer Maschinenstraße Leder mit verschiedenfarbiger Oberfläche hergestellt werden sollen.

Ein weiterer Nachteil der Anwendung des bekannten Verfahrens besteht darin, dass die Haftung zwischen der unbearbeiteten Narbenseite eines vollnarbigen Leders und der Beschichtung sehr niedrig ist und die Haftkraft einen Betrag von 4,5 N/cm² kaum überschreitet. Dieser Wert wird auf keinen Fall bei Ledern mit glatter Lederoberfläche und bei Ledern, die sich hydrophob verhalten, erreicht. Um höhere Haftungswerte zu erzielen, wie sie insbesondere in der Fahrzeug- und Schuhindustrie verlangt werden, ist es erforderlich, die Narbenseite aufzurauen, wodurch die Narbstruktur verfälscht wird.

Bei einem mehrschichtigen Aufbau der Zurichtung besteht weiters die Gefahr, dass sich die einzelnen Schichten voneinander trennen. Ein weiterer, sehr wesentlicher Nachteil besteht darin, dass durch die Aufbringung verschiedener Schichten die gewünschte Wasserdampfdurchlässigkeit des zugerichteten Leders mit jeder Schicht vermindert wird, da das flüssige Beschichtungsmaterial in die offenen Poren der darunter liegenden verfestigten Schicht eindringt und diese Poren schließt.

Die vorliegende Erfindung hat sich die Aufgabe gestellt, die erwähnten Nachteile zu vermeiden und ein vollnarbiges Walknappaleder sowie ein Verfahren zur Herstellung desselben zu schaffen, das den Herstellungsvorgang wesentlich vereinfacht und kostengünstiger macht, wobei die erforderlichen Eigenschaften des Leders gewährleistet sind.

Zur Lösung dieser Aufgabe schlägt die Erfindung, ausgehend von einem vollnarbigen Walknappaleder der eingangs beschriebenen Art vor, dass die Zurichtung aus einer einzigen, auf die Narbenseite des vor dem Aufbringen der Zurichtung mechanisch weichgemachten, insbesondere gewalkten Leders aufgebrachten Schicht gebildet ist. Wesentlich ist somit beim erfindungsgemäßen Walknappaleder, dass zunächst durch mechanische Behandlung, insbesondere durch Walken bzw. Millen, aber auch durch einen oder mehrere Stollvorgänge, das Leders weich gemacht wird, wodurch dieses seinen erforderlichen Weichheitsgrad erhält, wobei durch diese Behandlung die Narbenseite auch einen guten Haftgrund für die Zurichtung bildet. Dadurch, dass auf dieser Narbenseite nach der mechanischen Behandlung, insbesondere durch Walken, nur eine einzige Schicht angeordnet ist, ist auch die erforderliche Wasserdampfdurchlässigkeit sichergestellt. Auf jeden Fall ist auch durch Reduktion der Arbeitsvorgänge der Herstellungsprozess wesentlich einfacher und kostengünstiger.

Sehr gute mechanische Eigenschaften des erfindungsgemäßen Walknappaleders werden dann erzielt, wenn die die Zurichtung bildende Kunststoffdispersion einen Feststoffanteil zwischen 30 und 55 Vol.%, vorzugsweise zwischen 35 und 40 Vol.% aufweist. Durch Verwendung einer solchen Kunststoffdispersion können auch kleine Fehler an der Narbenseite korrigiert werden.

Zweckmäßig besteht die Kunststoffdispersion zumindest teilweise aus einer Polyurethandispersion, die nach Trocknung und Vernetzung einen Film mit einem mittleren Weichheitsgrad bildet. In einer Ausführungsform der vorliegenden Erfindung besteht die Kunststoffdispersion zumindest teilweise aus einem vorzugsweise aliphatischen Polyester sowie gegebenenfalls Polyacrylat enthaltenden Polyurethan-Dispersion. Die Polyurethandispersion besteht vorzugsweise aus einem aliphatischen Polyester und kann auch Polyacrylat enthalten.

Vorzugsweise enthält die Kunststoffdispersion auch eine hochmolekulare, filmbildende Polysiloxandispersion oder -emulsion in einer Menge zwischen 3,5 Vol.% und 6 Vol.-%. Die aus einer solchen Kunststoffdispersion hergestellte Zurichtung bildet nach Wasserentzug bzw. Lösungsmittelverdampfung einen weichen bis mittelharten Film, wobei die höchste mechanische Festigkeit nach seiner Vernetzung erzielt wird. Diese mechanischen Festigkeitseigenschaften bleiben auch nach einer Hydrolysenalterung vollständig oder nahezu vollständig erhalten.

Die die Zurichtung bildende Kunststoffdispersion kann gemäß einem weiteren Merkmal der Erfindung Mikrohohlkugeln mit einem Durchmesser kleiner als 45 µm enthalten, deren dünne Hülle zumindest zum Teil aus Polyvinylidenchlorid-Copolymerisat besteht und die im Inneren ein Gas, beispielsweise Isobutan, enthalten. Diese Mikrohohlkugeln, welche dem Feststoffanteil zugerechnet werden, sowie gegebenenfalls weitere der Kunststoffdispersion beigemengte Kunststoffpartikel mit einer Größe kleiner als 0,35 µm, insbesondere aus Polypropylen, Polyethylen, Polyamid od. dgl. verbessern den Griff und die Gleitfähigkeit der Oberfläche der Zurichtung sowie ebenfalls deren mechanische Festigkeit.

Die Zurichtung des erfindungsgemäßen Walknappaleders weist zweckmäßig eine Stärke zwischen 0,02 mm und 0,07 mm, vorzugsweise zwischen 0,05 mm und 0,07 mm und vorzugsweise eine Dichte von 0,9 g/cm³ bis 1 g/cm³ auf.

Es hat sich als zweckmäßig erwiesen, wenn die Kunststoffdispersion ein feinpulveriges Holzmehl in einer Menge zwischen 0,5 und 9 Vol.-%, vorzugsweise in einer Menge zwischen 1,5 und 7 Vol.% enthält. Dadurch kann die Wasserdampfdurchlässigkeit der Zurichtung verbessert bzw. durch Variation der beigefügten Menge verändert und den jeweiligen Erfordernissen angepasst werden. Weiters wirkt das beigemengte Holzmehl wie ein Mattierungsmittel und das Leder erhält einen angenehmen Griff.

Besonders vorteilhaft ist es, wenn das Leder vor dem Aufbringen der Kunststoffdispersion die Form eines Formatzuschnittes aufweist, wenn also aus einer großen Lederhaut vor dem Aufbringen der Kunststoffdispersion kleinere, der Verwendung des Leders entsprechende Formatteile herausgeschnitten werden. Eine ganze Rindlederhaut mit einer Größe von etwa 5,5 m² weist in den verschiedenen Bereichen eine unterschiedliche Dichte und Faserstruktur auf, was bei der Bildung der Formatzuschnitte berücksichtigt werden kann. So können die aus dem eine höhere Dichte aufweisenden Zentrum der Haut hergestellten Formatzuschnitte, mit einer geeigneten Zurichtung versehen, für Lenkradüberzüge verwendet werden, die aus den eine lose Faserstruktur aufweisenden Flanken der Haut gebildeten Formatzuschnitte für Polsterbezüge herangezogen werden. Auf diese Weise kann die gesamte Haut optimal ohne wesentlichen Verschnitt genutzt werden.

Falls erwünscht kann beim erfindungsgemäßen Walknappaleder noch eine dünne Finish-Schicht auf die Zurichtung aufgebracht werden, welche jedoch keinen Teil der Zurichtung bildet.

Das Verfahren zur Herstellung eines vollnarbigen Walknappaleders, das an seiner Narbenseite mit einer Zurichtung versehen ist, die aus einer verfestigten Kunststoffdispersion besteht, ist im Wesentlichen dadurch gekennzeichnet, dass ein eine Narbenseite aufweisendes Leder, insbesondere Rindleder, zum Weichmachen einer mechanischen Behandlung, vorzugsweise einer Walkbehandlung unterzogen wird, wobei eine Walknappastruktur gebildet wird, worauf auf die Narbenseite eine wässerige Kunststoffdispersion in einer Menge aufgetragen und, vorzugsweise unter Wärmeeinwirkung, trocknen gelassen wird, sodass eine Beschichtung mit einer Stärke zwischen 0,02 mm und 0,07 mm, vorzugsweise zwischen 0,05 mm und 0,07 mm, gebildet wird. Hierbei wird vorzugsweise eine wässerige Kunststoffdispersion mit einem Feststoffanteil zwischen 30 Vol.-% und 55 Vol.-%, vorzugsweise zwischen 35 Vol.-% und 40 Vol.-% verwendet.

Diese wässerige Kunststoffdispersion kann neben Pigmenten vorzugsweise auch Mikrohohlkugeln enthalten, deren dünne Hülle zumindest zum Teil aus Polyvinylidenchlorid-Copolymerisat besteht und die im Inneren ein Gas, beispielsweise Isobutan, enthalten.

Bevorzugt wird eine wässerige Kunststoffdispersion verwendet, welche auch eine hochmolekulare, filmbildende Polysiloxandispersion oder -emulsion in einer Menge zwischen 3,5 Vol.-% und 6 Vol.-% enthält, wenn die Polysiloxandispersion oder -emulsion einen Feststoffanteil zwischen 40% und 60% aufweist.

Eine Verbesserung bzw. Steuerung der Wasserdampfdurchlässigkeit kann weiters dadurch erfolgen, dass der Kunststoffdispersion vor dem Auftragen feinpulveriges Holzmehl in einer Menge zwischen 0,5 und 9 Vol.-%, vorzugsweise in einer Menge zwischen 1,5 und 7 Vol.-%, beigemengt wird. Durch Variieren der Menge kann die Wasserdampfdurchlässigkeit den jeweiligen Erfordernissen angepasst werden. So kann durch Beimengung von Holzmehl in einer entsprechenden Menge das nachteilige Perforieren des zugerichteten Leders im Sitzbereich eines Autositzes vermieden werden. Außerdem wirkt das Holzmehl als Mattierungsmittel und verursacht einen angenehmen Griff.

Da die wässerige Kunststoffdispersion sowohl leichte als auch schwere Partikel enthält, muss sie vor ihrer Verwendung, um ein Absetzen bzw. ein Aufschwemmen dieser Partikel zu verhindern, gerührt werden. Um die dabei eingerührte und zu einer störenden Schaumbildung führende Luft zu entfernen, erfolgt zweckmäßig vor dem Auftragen ein Entschäumen durch Anlegen eines Vakuums oder durch Beimengung eines Entschäumungsmittels.

Das Aufbringen der Kunststoffdispersion kann in einem Arbeitsschritt mittels einer Auftragswalze, und zwar vorzugsweise mittels einer zu einer linearen Bewegung des Leders gegenläufig rotierenden Auftragswalze, durch Aufsprühen mittels einer Sprühpistole nass auf nass, oder durch Gießen mittels einer Gießmaschine erfolgen.
In einer Variante der vorliegenden Erfindung sprüht man die wässrige Kunststoffdispersion, gegebenenfalls in mehreren Arbeitsschritten nass auf nass, auf die Narbenseite des Leders auf.

Das Aufsprühen geschieht zweckmäßig bei ganzen Lederhäuten. Wird hingegen die Kunststoffdispersion mittels einer Auftragswalze oder durch Aufgießen auf die Narbenseite des Leders aufgebracht, so ist es erfindungsgemäß von Vorteil, aus einer ganzen Lederhaut Teile oder Formatzuschnitte herauszuschneiden und diese mit einer Zurichtung zu versehen. Das Aufbringen der Zurichtung kann in diesem Fall kostengünstig auf kleinen Anlagen erfolgen.

Ferner kann es von Vorteil sein, vor dem Aufbringen der Zurichtung die Rückseite des Leders mit einer elastomeren Schaumbeschichtung zu versehen, um einen Polsterungseffekt zu erreichen. Dies ist insbesondere auch dann zweckmäßig, wenn die Kunststoffdispersion durch Gießen auf die Narbenseite eines Leders aufgetragen wird, das sich auf einem Beschleunigungsband einer Gießmaschine befindet, da durch diese Schaumbeschichtung die Haftung zwischen dem Leder und dem Beschleunigungsband verbessert wird.

Die Trocknung der aufgetragenen wässerigen Kunststoffdispersion erfolgt erfindungsgemäß bei einer Temperatur zwischen 70° C und 90° C, vorzugsweise von 80° C. Nach der Trocknung kann das Leder noch etwa 12 Stunden einer Wärmelagerung bei einer Temperatur von 50°C unterzogen werden. Nach dieser Wärmelagerung ist die Vernetzung der Zurichtung abgeschlossen, und die Haftkraft zwischen der Zurichtung und der Narbenseite des Leders beträgt an allen Stellen mehr als 4,5 N/cm².

Vermindert sich durch die Zurichtung die Weichheit des Leders wesentlich, so kann es von Vorteil sein, wenn erfindungsgemäß das Leder nach Bildung der aus einer verfestigten Kunststoffdispersion bestehenden Zurichtung einer Nachbehandlung durch zusätzliches Walken unterzogen wird.

Insbesondere dann, wenn das Leder großen Beanspruchungen ausgesetzt ist, wie beispielsweise bei Sitzen in öffentlichen Verkehrsmitteln, ist es von Vorteil, wenn die Narbenseite des Leders vor dem Auftragen der Kunststoffdispersion einer Vorbehandlung unterzogen wird, also beispielsweise durch Schleifen mittels eines feinkörnigen Schleifpapiers aufgeraut wird, derart, dass die Narbenstruktur auf der Oberfläche des Leders zumindest zu 90% erhalten bleibt. Durch ein solches leichtes Anschleifen mit einem extrem feinkörnigen Schleifpapier wird die Haftkraft wesentlich erhöht.

Es kann aber auch zu diesem Zweck die Narbenseite des Leders vor dem Aufbringen der Zurichtung beflammt werden. Es wurde gefunden, dass durch dieses Beflammen quasi in der Oberfläche des Leders Radikale entstehen, wodurch gleichfalls die Haftung der Zurichtung wesentlich verbessert wird. Am besten eignet sich hierfür eine Flamme ähnlich einer Lötflamme, durch die die Narbenschicht lediglich oberflächlich auf mehr als 160°C erwärmt wird, wobei in der Mitte und an der Unterseite des Leders die Temperatur 110°C nicht übersteigt. Durch diese Behandlung des Leders verändert die Narbenseite ihr Aussehen nicht.

Zweckmäßig werden vor dem Auftragen der die Zurichtung bildenden Dispersion aus einer Lederhaut Formatteile herausgetrennt. Dadurch kann nicht nur, wie bereits erwähnt, den unterschiedlichen Beschaffenheiten der Haut in den einzelnen Bereichen derselben Rechnung getragen und dadurch die Verwertung der gesamten Haut sichergestellt werden, sondern es ist auch möglich, die Zusammensetzung und Beschaffenheit der Zurichtung entsprechend den Erfordernissen auf einfache Weise zu verändern. So können beispielsweise die einzelnen Formatteile so gestaltet werden, dass ein Teil der Zurichtung weicher und ein anderer Teil härter ist bzw. eine größere Dichte aufweist und daher über höhere Abriebeigenschaften verfügt, oder dass Teile der Zurichtung ein verschiedenes Aussehen, beispielsweise eine unterschiedliche Farbtönung, aufweisen.

Dies kann auf einfache Weise dadurch erzielt werden, dass das Auftragen der die Zurichtung bildenden Dispersion durch einen Datenträger, also beispielsweise durch eine CD-Rom, eine Diskette oder ein Speicherchip, gesteuert wird. Ein weiterer Vorteil der Verwendung solcher Formatteile ist darin gelegen, dass für das Auftragen der Kunststoffdispersion billigere Sprühanlagen und feinere Sprühdüsen verwendet werden können, sodass weniger Oberspray erforderlich ist und eine geringere Menge an Abfall anfällt.

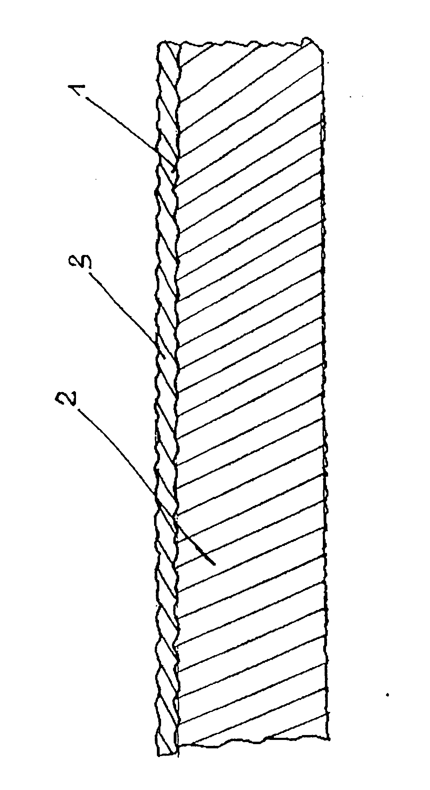

In der Zeichnung ist ein Schnitt durch das erfindungsgemäße Leder in stark vergrößertem Maßstab dargestellt.

Die Naturnarbe 1 eines vollnarbigen unbehandelten Rindleders 2 ist nach einem mehrstündigen Walkvorgang mit einer Zurichtung 3 versehen, die aus einer verfestigten Kunststoffdispersion gebildet ist und eine Stärke zwischen 0,02 mm und 0,07 mm, vorzugsweise zwischen 0,05 mm und 0,07 mm aufweist. Die die Zurichtung 3 bildende Kunststoffdispersion besteht zum überwiegenden Teil aus einer Pigment enthaltenden Polyurethandispersion, der hochmolekulares Polysiloxan als Dispersion oder Emulsion sowie zweckmäßig Mikrohohlkugeln mit einer Hülle aus Polyvinylidenchlorid - Copolymerisat, ein Entschäumungsmittel sowie ein Mattierungsmittel beigefügt sind.

### Beispiel 1:

Eine auf einem Vakuumtrockner getrocknete, chromgegerbte harte Rindlederhaut (Crust) in der Farbe schwarz, mit einer vollnarbigen, ebenen und glatten Narbenseite und einer Stärke von ca. 1,2 mm wurde 6 Stunden gewalkt. Dadurch wurde das Leder sehr weich und besaß auch in den härteren Zonen einen Weichheitsgrad von mehr als 5,5, gemessen in einem Weichheitstestgerät BLC ST300 nach IUP36 bei einem Ringdurchmesser von 25 mm. Die vollnarbige, nicht vorbehandelte Narbenseite des Leders wies an ihrer Oberfläche leichte Beschädigungen auf. Die kleinen Vertiefungen, welche auf Heckenrisse od. dgl. zurückzuführen waren, wurden nach dem Walken rau und besser sichtbar, ebenso die Haarporen.

Durch das Walken entstand nicht nur das Walkkorn, sondern es wurde die charakteristische Oberflächenstruktur des Leders wieder sichtbar, und die vorher glatte Oberfläche wies eine mikroskopische Rauhigkeit auf. Die Narbenseite wurde nach dem Walken "geöffnet".

Die für die Zurichtung verwendete Dispersion setzt sich wie folgt zusammen und hat einen Feststoffanteil von etwa 43 Vol.-%:
800 g Polyurethandispersion 40%ig
60 g Pigmentdispersion, Farbe schwarz
40 g Vernetzer 80%ig
60 g hochmolekulares Polysiloxan 50%ig als Dispersion
30 g Isopropanol
3 g Entschäumer
6 g trockene Mikrohohlkugeln aus Polyvinylidenchlorid- Copolymerisat mit einer Größe von weniger als 30 µm
1 g anorganisches Mattierungsmittel trocken

Nach dem Vermischen wurde die Dispersion mittels Vakuum entlüftet, bis sie homogen und frei von Lufteinschlüssen war. Die Mischung hatte eine Dichte von 0,91 g/cm³ und eine Viskosität von 14 Sekunden, gemessen im Ford-Becher mit einer Düse von 4 mm Durchmesser.

Anschließend erfolgte das Auftragen dieser Mischung auf die Narbenseite des sich auf einer Transportbahn fortbewegenden Leders mittels einer Auftragswalze, die gegenläufig zur Fortbewegung des Leders rotierte, und zwar unter einem sehr leichten Druck. Dabei wurde eine Menge von ca. 110 cm³/m² auf das Leder aufgetragen. Hierauf erfolgte eine Trocknung der wässerigen Dispersion im Wärmekanal bei einer Temperatur von ca. 80° C und einer Verweilzeit von ca. 3 Minuten. Nach der Trocknung wies die Zurichtung eine Stärke von 0,05 mm auf.

Die vor dem Aufbringen der Zurichtung vorhandene Walknappastruktur des Leders blieb nach dem Aufbringen vollständig, die typische Oberflächenstruktur des vollnarbigen Leders mit deutlich sichtbaren Haarporen nahezu vollständig erhalten. Nach einer Wärmelagerung von 12 Stunden bei etwa 50° C war die Vernetzung der Zurichtung abgeschlossen und die Zurichtung wies nach DIN 53357 eine Haftung von mehr als 6N/cm² auf.

Die fein gesäuberte, abgelöste Zurichtung hatte eine Dichte von ca. 0,92 g/cm³ und schwamm auf einem ein Netzmittel enthaltenden Wasser. Die Wasserdampfdurchlässigkeit betrug 1,9 mg/cm².h. Die Abriebfestigkeit nach DIN 53109 (Taber) mit 500 g Belastung war nach 750 Zyklen noch in Ordnung. Das Dauerbiegeverhalten nach DIN 53351 war nach 100.000 Flexen in Ordnung, nach einer Hydrolysenalterung von 7 Tagen bei + 70° C und 95% relative Luftfeuchtigkeit hielt die Zurichtung noch 100.000 Flexe aus.

Der Weichheitsgrad des zugerichteten Leders, gemessen mit dem Weichheitstestgerät BLC ST 300 nach IUP 36 betrug an allen Messpunkten zwischen 4,5 und 5,5. Das Leder erfüllte demnach die Anforderungen sowohl für Sportschuhe als auch für Fahrzeuginnenausstattungen.

Ein Parallelversuch mit einem im Vakuum getrockneten, ungewalkten Leder, das unter den gleichen Bedingungen zugerichtet und erst anschließend gewalkt wurde, wies eine Haftung nach DIN 53357 von lediglich 3,7 N/cm³ auf.

### Beispiel 2:

Ein vollnarbiges, naturfarbiges Leder, welches auf einem Spannrahmen getrocknet wurde und eine Stärke von 1,6 mm besaß, zeigte nach einem Walken von 8 Stunden einen Weichheitsgrad von mehr als 4,5 an allen Messpunkten. Die für die Zurichtung verwendete Dispersion war ähnlich zusammengesetzt wie bei Beispiel 1. Es wurde jedoch eine Weißpigmentdispersion mit einem Anteil von 120 g und an Stelle von 1 g anorganisches Mattierungsmittel wurde 2 g Polypropylenpuder verwendet. An Stelle von 800 g Polyurethandispersion wurden 700 g Polyurethandispersion und 100 g einer harten Polyacrylatdispersion eingesetzt. Die Dispersion wurde, wie im Beispiel 1 beschrieben, in einer Menge von 140 cm³/m² auf das Leder aufgetragen und war beim Auftragen gleichfalls homogen und frei von eingerührter Luft. Sie hatte in Folge der Verwendung eines Weißpigments mit hohem spezifischen Gewicht eine Dichte von 1,2 g/cm³. Die Viskosität betrug 17 Sekunden. Nach dem Trocknen und Lagern ergaben sich bei einer Prüfung folgende Werte:
Weichheitsgrad: 4,0 bis 5,0
Wasserdampfdurchlässigkeit und Luftdurchlässigkeit: 1,5 mg/cm².h
Dichte der Zurichtung: ca. 1 g/cm³
Dauerbiegeverhalten: 100.000 Flexe, auch nach Hydolysenalterung (in Ordnung)
Abriebfestigkeit (Taber): 600 Zyklen (in Ordnung)

### Beispiel 3:

Eine, wie in Beispiel 1 beschriebene, für das Auftragen einer die Zurichtung bildenden Dispersion vorbereitete chromgegerbte Rindlederhaut (Crust) zeigte die in Beispiel 1 beschriebenen Merkmale.

Die für die Zurichtung verwendete Dispersion setzt sich wie folgt zusammen:
750 g Polyester-Polyuretandispersion mit einem Feststoffanteil von ca. 40 Vol.-%
80 g Pigmentdispersion, Farbe schwarz
35 g Vernetzer 80-%ig
50 g hochmolekulares Polysiloxan 60-%ig als Emulsion
20 g Isopropanol
15 g feuchte Mikrohohlkugeln mit einer Hülle aus Polyvinylidenchlorid-Copolymerisat
1 g Entschäumer
25 g feinpulveriges Holzmehl als Mattierungsmittel und zur Erhöhung der Wasserdampfdurchlässigkeit.

Nach dem Vermischen hatte der Ansatz eine Dichte von 0,89 g/cm³ und eine Viskosität von 45 Sekunden, gemessen im Ford-Becher mit einer Düse von 4 mm Durchmesser.

Das Auftragen des Mischungsansatzes auf das Leder erfolgte wie in Beispiel 1 beschrieben, ebenso die Trocknung. Nach einer Zwischenlagerung bei Raumtemperatur von 24 Stunden wurde das zugerichtete Leder nochmals 5 Stunden in einem Millfass gewalkt. Danach war das Leder sehr weich und hatte einen Weichheitsgrad von mehr als 5,5 an allen Messpunkten. Die Stärke der Zurichtung betrug 0,035 mm. Die Wasserdampfdurchlässigkeit betrug 2,7 mg/cm² • h und war somit überraschend extrem hoch.

Durch diese hohe Wasserdampfdurchlässigkeit kann das nachteilige Perforieren des zugerichteten Leders im Sitzbereich eines Autositzes vermieden werden.

Da die Narbenseite des gewalkten Naturleders auf Grund ihrer "Öffnung" durch das Walken eine gute Haftung der Zurichtung sicherstellt, bedarf es vor dem Aufbringen der Zurichtung keiner Bearbeitung dieser Narbenseite. Bei Ledern, die extrem hohen Beanspruchungen ausgesetzt werden, wie beispielsweise bei Ledern, die für Sitze in öffentlichen Verkehrsmitteln verwendet werden, ist es jedoch von Vorteil, wenn die Narbenseite vor dem Aufbringen der Zurichtung mittels eines feinkörnigen Schleifpapiers geringfügig aufgeraut oder beflammt wird, wodurch sich die Haftung zwischen der Narbenseite und der Zurichtung erhöht.

Ferner kann gegebenenfalls auf die Zurichtung eine dünne Finish-Schicht aufgebracht werden, welche nicht der Zurichtung zuzurechnen ist, und welche immer die Wasserdampfdurchlässigkeit verschlechtert.

Auf der Rückseite des Leders kann, falls erwünscht, eine beispielsweise Mikrohohlkugeln enthaltende elastomere Schaumbeschichtung vorgesehen sein. Diese Schaumbeschichtung verbessert auch bei einem Aufgießen bzw. Aufspritzen der Kunststoffdispersion auf die Narbenseite die Haftung des Leders auf dem Beschleunigungsband einer Gießmaschine.

Die vorliegende Erfindung ermöglicht es, Walknappaleder in Zukunft direkt bei der lederverarbeitenden Industrie in den gewünschten Farben selbst mit einer Farbzurichtung zu versehen, vor allem, weil das Aufgießen der Zurichtung auf die Narbenseite des Leders bei Verwendung kleinerer aus einer Lederhaut herausgeschnittener Stücke bzw. bei Verwendung von Formatzuschnitten kostengünstig auf kleinen Gieß-, Spritz- und Walzenauftragsmaschinen erfolgen kann.

An Stelle des Walkens kann vor dem Aufbringen der die Zurichtung bildenden Schicht die Lederhaut auch durch andere mechanische Verfahren, mit welchen das Leder weich gemacht und/oder die Poren an der Narbenseite geöffnet werden, wie beispielsweise durch intensives Stollen, vorbehandelt werden. In diesem Fall muss allerdings in der Regel das Leder nach dem Zurichten zur Ausbildung des Walkkorns gewalkt werden. Die weiche bis mittelharte Zurichtung hat bei entsprechender messbarer Stärke von mehr als 2 mm eine Härte zwischen 38 und 68 Shore A. Durch zusätzliches Walken nach dem Zurichten wird auch die Wasserdampfdurchlässigkeit im Vergleich mit einem Leder, welches vor dem Zurichten gewalkt wurde, um 10 bis 29 % verbessert.

Die hohe Wasserdampfdurchlässigkeit kommt erfindungsgemäß vor allem dadurch zustande, dass die Mikroporen in der einschichtigen Zurichtung von oben nach unten direkt durchgängig, also nicht überlagert sind; sie ähneln Poren, die mechanisch durch Nadeln erzeugt wurden.

## Patentansprüche

1. Vollnarbiges Walknappaleder, das an seiner Narbenseite (1) mit einer Zurichtung (3) versehen ist, die aus einer verfestigten Kunststoffdispersion besteht, wobei auf der Zurichtung (3) gegebenenfalls eine Finish-Schicht aufgebracht ist, **dadurch gekennzeichnet, dass** die Zurichtung (3) aus einer einzigen Schicht gebildet ist, die auf die Narbenseite (1) des vor dem Aufbringen der Zurichtung (3) auf das durch mechanische Behandlung weichgemachte Leder (2) aufgebracht ist.

2. Walknappaleder nach Anspruch 1, **dadurch gekennzeichnet, dass** die Kunststoffdispersion einen Feststoffanteil zwischen 30 Vol.-% und 55 Vol.-% aufweist.

3. Walknappaleder nach Anspruch 1 oder 2, **dadurch gekennzeichnet, dass** die Kunststoffdispersion zumindest teilweise aus einer Polyurethandispersion besteht.

4. Walknappaleder nach Anspruch 1, 2 oder 3, **dadurch gekennzeichnet, dass** die Kunststoffdispersion Pigmentpartikel enthält.

5. Walknappaleder nach einem der Ansprüche 1 bis 4, **dadurch gekennzeichnet, dass** die Kunststoffdispersion eine hochmolekulare, filmbildende Polysiloxandispersion oder -emulsion in einer Menge zwischen 3,5 Vol.-% und 6 Vol.-% enthält, wobei der Feststoffanteil der Dispersion bzw. Emulsion zwischen 40% und 60% beträgt.

6. Walknappaleder nach einem der Ansprüche 1 bis 5, **dadurch gekennzeichnet, dass** die Kunststoffdispersion Mikrohohlkugeln mit einem Durchmesser kleiner als 45 µm enthält, deren dünne Hülle zumindest zum Teil aus Polyvinylidenchlorid - Copolymerisat besteht und die im Inneren ein Gas enthalten.

7. Walknappaleder nach einem der Ansprüche 1 bis 6, **dadurch gekennzeichnet, dass** die Kunststoffdispersion Beimengungen von Kunststoffpartikeln enthält.

8. Walknappaleder nach einem der Ansprüche 1 bis 7, **dadurch gekennzeichnet, dass** die Zurichtung (3) eine Stärke zwischen 0,02 mm und 0,07 mm aufweist.

9. Walknappaleder nach einem der Ansprüche 1 bis 8, **dadurch gekennzeichnet, dass** die Zurichtung (3) eine Dichte zwischen 0,9 g/cm³ und 1 g/cm³ aufweist.

10. Walknappaleder nach Anspruch 1, **dadurch gekennzeichnet, dass** die Kunststoffdispersion ein feinpulveriges Holzmehl in einer Menge zwischen 0,5 und 9 Vol.-% enthält.

11. Walknappaleder nach Anspruch 1, **dadurch gekennzeichnet, dass** es vor dem Aufbringen der Kunststoffdispersion die Form eines Formatzuschnittes aufweist.

12. Verfahren zur Herstellung eines vollnarbigen Walknappaleders, das an seiner Narbenseite (1) mit einer Zurichtung (3) versehen ist, die aus einer verfestigten Kunststoffdispersion besteht, **dadurch gekennzeichnet, dass** ein eine Narbenseite (1) aufweisendes Leder, insbesondere Rindleder, zum Weichmachen einer mechanischen Behandlung unterzogen wird, wobei eine Walknappastruktur gebildet wird, worauf auf die Narbenseite (1) eine wässerige Kunststoffdispersion in einer Menge aufgetragen und trocknen gelassen wird, so dass eine Beschichtung mit einer Stärke zwischen 0,02 mm und 0,07 mm gebildet wird.

13. Verfahren nach Anspruch 12, **dadurch gekennzeichnet, dass** eine wässerige Kunststoffdispersion mit einem Feststoffanteil zwischen 30 Vol.-% und 55 Vol.-% verwendet wird.

14. Verfahren nach Anspruch 12, **dadurch gekennzeichnet, dass** eine wässerige Kunststoffdispersion verwendet wird, die Pigmentpartikel enthält.

15. Verfahren nach Anspruch 12, **dadurch gekennzeichnet, dass** eine wässerige Kunststoffdispersion verwendet wird, die Mikrohohlkugeln enthält.

16. Verfahren nach Anspruch 12, **dadurch gekennzeichnet, dass** eine wässerige Kunststoffdispersion verwendet wird, welche eine hochmolekulare, filmbildende Polysiloxandispersion oder -emulsion in einer Menge von mehr als 3,5 Vol.-% enthält.

17. Verfahren nach Anspruch 12, **dadurch gekennzeichnet, dass** der Kunststoffdispersion vor dem Auftragen feinpulveriges Holzmehl in einer Menge zwischen 0,5 und 9 Vol.-% beigemengt wird.

18. Verfahren nach einem der Ansprüche 12 bis 17, **dadurch gekennzeichnet, dass** die wässerige Kunststoffdispersion vor dem Auftragen entschäumt wird.

19. Verfahren nach einem der Ansprüche 12 bis 18, **dadurch gekennzeichnet, dass** die wässerige Kunststoffdispersion mittels einer rotierenden Auftragswalze auf die Narbenseite des Leders aufgetragen wird.

20. Verfahren nach einem der Ansprüche 12 bis 18, **dadurch gekennzeichnet, dass** die wässerige Kunststoffdispersion mittels einer Sprühpistole auf die Narbenseite des Leders aufgesprüht wird.

21. Verfahren nach einem der Ansprüche 12 bis 18, **dadurch gekennzeichnet, dass** die wässerige Kunststoffdispersion auf die Narbenseite des Leders mittels einer Gießmaschine aufgegossen wird.

## Claims

1. Full-grained drummed nappa leather which is provided on its grain side (1) with a dressing (3) which consists of a solidified plastics dispersion, a finish coat optionally being applied on the dressing (3), **characterized in that** the dressing (3) is formed from a single coat which is applied to the grain side (1) of the leather (2) softened before application of the dressing (3) by mechanical treatment.

2. Drummed nappa leather according to Claim 1, **characterized in that** the plastics dispersion has a solids content of from 30% by volume to 55% by volume.

3. Drummed nappa leather according to Claim 1 or 2, **characterized in that** the plastics dispersion at least partly comprises a polyurethane dispersion.

4. Drummed nappa leather according to Claim 1, 2 or 3, **characterized in that** the plastics dispersion contains pigment particles.

5. Drummed nappa leather according to any of Claims 1 to 4, **characterized in that** the plastics dispersion contains a high molecular weight, film-forming polysiloxane dispersion or emulsion in an amount of from 3.5% by volume to 6% by volume, the solids content of the dispersion or emulsion being from 40% to 60%.

6. Drummed nappa leather according to any of Claims 1 to 5, **characterized in that** the plastics dispersion contains hollow microspheres having a diameter of less than 45 µm, whose thin shell at least partly comprises polyvinylidene chloride copolymer and which contain a gas in the interior.

7. Drummed nappa leather according to any of claims 1 to 6, **characterized in that** the plastics dispersion contains admixed plastics particles.

8. Drummed nappa leather according to any of Claims 1 to 7, **characterized in that** the dressing (3) has a thickness of from 0.02 mm to 0.07 mm.

9. Drummed nappa leather according to any of Claims 1 to 8, **characterized in that** the dressing (3) has a density of from 0.9 g/cm³ to 1 g/cm³.

10. Drummed nappa leather according to Claim 1, **characterized in that** the plastics dispersion contains a finely pulverulent wood meal in an amount of from 0.5 to 9% by volume.

11. Drummed nappa leather according to Claim 1, **characterized in that** it has the form of a size cut prior to application of the plastics dispersion.

12. Process for the production of a full-grained drummed nappa leather which is provided, on its grain side (1), with a dressing (3) which consists of a solidified plastics dispersion, **characterized in that** a leather having a grain side (1), in particular cattle leather, is subjected to a mechanical treatment for softening, a pebbled-grain nappa structure being formed, whereupon an aqueous plastics dispersion is applied to the grain side (1) in an amount, and is allowed to dry, such that a coating is formed with a thickness of from 0.02 mm to 0.07 mm.

13. Process according to Claim 12, **characterized in that** an aqueous plastics dispersion having a solids content of from 30% by volume to 55% by volume is used.

14. Process according to Claim 12, **characterized in that** an aqueous plastics dispersion which contains pigment particles is used.

15. Process according to Claim 12, **characterized in that** an aqueous plastics dispersion which contains hollow microspheres is used.

16. Process according to Claim 12, **characterized in that** an aqueous plastics dispersion which contains a high molecular weight, film-forming polysiloxane dispersion or emulsion in an amount of more than 3.5% by volume is used.

17. Process according to Claim 12, **characterized in that** finely pulverulent wood meal is mixed with the plastics dispersion, before the application, in an amount of from 0.5 to 9% by volume.

18. Process according to any of Claims 12 to 17, **characterized in that** the aqueous plastics dispersion is defoamed before the application.

19. Process according to any of Claims 12 to 18, **characterized in that** the aqueous plastics dispersion is applied to the grain side of the leather by means of a rotating coating roll.

20. Process according to any of Claims 12 to 18, **characterized in that** the aqueous plastics dispersion is sprayed onto the grain side of the leather by means of a spray gun.

21. Process according to any of Claims 12 to 18, **characterized in that** the aqueous plastics dispersion is cast onto the grain side of the leather by means of a casting apparatus.

## Revendications

1. Cuir nappa pleine fleur foulonné qui est muni sur son côté fleur (1) d'un apprêt (3) constitué d'une dispersion plastique solidifiée, une couche de finition étant éventuellement appliquée sur l'apprêt (3), **caractérisé en ce que** l'apprêt (3) est formé à partir d'une couche unique, qui est appliquée sur le côté fleur (1) du cuir (2) ramolli par un traitement mécanique avant l'application de l'apprêt (3).

2. Cuir nappa foulonné selon la revendication 1, **caractérisé en ce que** la dispersion plastique présente une proportion de solides comprise entre 30 % en volume et 55 % en volume.

3. Cuir nappa foulonné selon la revendication 1 ou 2, **caractérisé en ce que** la dispersion plastique est constituée au moins en partie d'une dispersion de polyuréthane.

4. Cuir nappa foulonné selon la revendication 1, 2 ou 3, **caractérisé en ce que** la dispersion plastique contient des particules de pigment.

5. Cuir nappa foulonné selon l'une quelconque des revendications 1 à 4, **caractérisé en ce que** la dispersion plastique contient une dispersion ou émulsion de polysiloxane filmogène de poids moléculaire élevé en une quantité comprise entre 3,5 % en volume et 6 % en volume, la proportion de solides de la dispersion ou émulsion étant comprise entre 40 % et 60 %.

6. Cuir nappa foulonné selon l'une quelconque des revendications 1 à 5, **caractérisé en ce que** la dispersion plastique contient des microbilles creuses d'un diamètre inférieur à 45 µm, dont l'enveloppe mince est constituée au moins en partie d'un copolymère de polychlorure de vinylidène et qui contiennent un gaz à l'intérieur.

7. Cuir nappa foulonné selon l'une quelconque des revendications 1 à 6, **caractérisé en ce que** la dispersion plastique contient des additions de particules plastiques.

8. Cuir nappa foulonné selon l'une quelconque des revendications 1 à 7, **caractérisé en ce que** l'apprêt (3) présente une épaisseur comprise entre 0,02 mm et 0,07 mm.

9. Cuir nappa foulonné selon l'une quelconque des revendications 1 à 8, **caractérisé en ce que** l'apprêt (3) présente une densité comprise entre 0,9 g/cm³ et 1 g/cm³.

10. Cuir nappa foulonné selon la revendication 1, **caractérisé en ce que** la dispersion plastique contient une farine de bois sous la forme d'une poudre fine en une quantité comprise entre 0,5 et 9 % en volume.

11. Cuir nappa foulonné selon la revendication 1, **caractérisé en ce qu'**il présente la forme d'une découpe formatée avant l'application de la dispersion plastique.

12. Procédé de fabrication d'un cuir nappa pleine fleur foulonné qui est muni sur son côté fleur (1) d'un apprêt (3) constitué d'une dispersion plastique solidifiée, **caractérisé en ce qu'**un cuir présentant un côté fleur (1), notamment un cuir de vachette, est soumis à un traitement mécanique pour être ramolli, une structure de cuir nappa foulonné étant formée, sur laquelle une dispersion plastique aqueuse est appliquée en une quantité sur le côté fleur (1) et laissée sécher, de manière à former un revêtement d'une épaisseur comprise entre 0,02 mm et 0,07 mm.

13. Procédé selon la revendication 12, **caractérisé en ce qu'**une dispersion plastique aqueuse ayant une proportion de solides comprise entre 30 % en volume et 55 % en volume est utilisée.

14. Procédé selon la revendication 12, **caractérisé en ce qu'**une dispersion plastique aqueuse qui contient des particules de pigment est utilisée.

15. Procédé selon la revendication 12, **caractérisé en ce qu'**une dispersion plastique aqueuse qui contient des microbilles creuses est utilisée.

16. Procédé selon la revendication 12, **caractérisé en ce qu'**une dispersion plastique aqueuse qui contient une dispersion ou émulsion de polysiloxane filmogène de poids moléculaire élevé en une quantité supérieure à 3,5 % en volume est utilisée.

17. Procédé selon la revendication 12, **caractérisé en ce qu'**une farine de poids sous la forme d'une poudre fine est ajoutée à la dispersion plastique en une quantité comprise entre 0,5 et 9 % en volume avant l'application.

18. Procédé selon l'une quelconque des revendications 12 à 17, **caractérisé en ce que** la dispersion plastique aqueuse est démoussée avant l'application.

19. Procédé selon l'une quelconque des revendications 12 à 18, **caractérisé en ce que** la dispersion plastique aqueuse est appliquée sur le côté fleur du cuir au moyen d'un cylindre d'application rotatif.

20. Procédé selon l'une quelconque des revendications 12 à 18, **caractérisé en ce que** la dispersion plastique aqueuse est pulvérisée sur le côté fleur du cuir au moyen d'un pistolet de pulvérisation.

21. Procédé selon l'une quelconque des revendications 12 à 18, **caractérisé en ce que** la dispersion plastique aqueuse est versée sur le côté fleur du cuir au moyen d'une machine de coulée.
